# EUROPÄISCHE PATENTSCHRIFT

(11) **EP 2 431 679 B1**
(45) Veröffentlichungstag und Bekanntmachung des Hinweises auf die Patenterteilung: **01.04.2020**
(21) Anmeldenummer: 11004367.6
(22) Anmeldetag: 27.05.2011
(51) Int. Cl.: F24F 12/00, F24F 13/18, E06B 7/10, F24F 3/147

(54) **System zur Raumbelüftung**
System for air conditioning a room
Système d'aération d'espace

(30) Priorität: 18.09.2010 DE 202010012838 U
(43) Veröffentlichungstag der Anmeldung: 21.03.2012
(60) Teilanmeldung: 19217910.9
(73) Patentinhaber: Zehnder Group International AG, 5722 Gränichen (CH)
(72) Erfinder: Kriesi, Ruedi, 8820 Wädenswil (CH)
(74) Vertreter: Rausch Wanischeck-Bergmann Brinkmann

(56) Entgegenhaltungen:
- EP-A1- 2 067 920
- EP-A2- 2 107 203
- WO-A1-03/091632
- WO-A1-2005/050099
- DE-A1- 4 115 710
- DE-A1- 4 222 987
- DE-A1- 10 010 817
- DE-A1- 19 709 328
- DE-A1- 19 855 056
- DE-U1- 9 202 039
- DE-U1- 20 204 163

## Beschreibung

Die Erfindung betrifft ein System zur Raumbelüftung mit einer in einer Raumwand ausgebildeten Fensteröffnung und mit einem Lüftungsgerät, das einen Zuluftkanal, einen Abluftkanal und einen Wärmetauscher aufweist.

Systeme zur Raumbelüftung im Allgemeinen sowie Lüftungsgeräte zur Raumbelüftung im Speziellen sind aus dem Stand der Technik an sich bekannt, weshalb es eines gesonderten druckschriftlichen Nachweises an dieser Stelle nicht bedarf.

Aus der DE 100 10 817 A1 ist eine Raumlüftungsvorrichtung bekannt, welche in eine Fensteröffnung zwischen der Gebäudeinnenseite und der Gebäudeaußenseite parallel zumindest einer Außenrahmenseite eines Fensters integrierbar ist. Die Raumlüftungsvorrichtung verfügt unter anderem über einen im Kreuzstrom betriebenen Wärmetauscher.

Aus der EP 2 067 920 A1 ist ein raumaußenseitig zu montierendes Belüftungsmodul bekannt, das über ein Gehäuse und einen darin integrierten Wärmetauscher verfügt. Zum Schutz des Belüftungsmoduls vor äußeren Einflüssen ist eine Abdeckung vorgesehen.

Aus der WO 03/091632 A1 ist eine unterhalb eines Fensters zu montierende Belüftungseinrichtung bekannt, die über einen Taupunktkühler verfügt.

Die DE 197 09 328 A1 betrifft eine Lufteinrichtung für eine Gebäudewand, die über einen in die Gebäudewand integrierbaren Formkörper verfügt, der Luftschächte bereitstellt.

Obgleich sich vorbekannte Systeme sowie Lüftungsgeräte zur Raumbelüftung im alltäglichen Praxiseinsatz bewährt haben, besteht Verbesserungsbedarf, insbesondere mit Blick auf eine Verwendung im Sanierungs-, das heißt Modernisierungsbau.

Die häufigste Modernisierungsmaßnahme an bestehenden Bauten ist der Ersatz der Fenster, weil diese für Schallschutz, thermischen Komfort und Wärmebedarf kostengünstig große Verbesserungen bringen. Vor dem Fensteraustausch durch Fensterfugen hinreichend gut belüftete Räume werden durch den Fensteraustausch aber sehr viel besser luftdicht abgeschlossen, was eine Belüftung der Räumlichkeiten durch regelmäßiges Öffnen der Fenster erforderlich macht, weil es ansonsten zu ungewollten Feuchtigkeitsschäden kommen kann. Derlei Feuchtigkeitsschäden können nur durch eine automatisch arbeitende Raumbelüftung zuverlässig vermieden werden. In diesem Zusammenhang ist es zur weiteren Reduktion des Wärmebedarfs zudem wünschenswert, mit einem Wärmetauscher die in der Abluft enthaltene Wärme auf die Zuluft zu übertragen. Dies wird üblicherweise mit zentralen Lüftungsgeräten erreicht, wobei in der Regel pro Wohneinheit ein zentrales Lüftungsgerät vorgesehen ist. Über entsprechende Kanal- oder Rohrleitungen sind die Räume der Wohneinheit an das zentrale Lüftungsgerät angeschlossen.

Die nachträgliche Installation eines zentralen Lüftungsgerätes ist nicht immer möglich, in jedem Fall aber aufwendig und kostenintensiv, da ausgehend vom zentralen Lüftungsgerät in jedem Raum einer Wohneinheit entsprechend dimensionierte Rohre bzw. Kanäle zu verlegen sind. Es besteht insofern ein Bedarf an Raumgeräten, die keiner Verbindung mit einem zentralen Lüftungsgerät bedürfen.

Derartige Raumgeräte sind aus dem Stand der Technik nicht unbekannt. Sie werden üblicherweise entweder in bestehende Fensteröffnungen eingepasst oder von der Fensteröffnung unabhängig rauminnenseitig montiert. Diese vorbekannten Ausführungsformen eines Raumgerätes sind aber nicht frei von Nachteilen. So ist die Einpassung eines Raumgerätes in eine bestehende Fensteröffnung insofern von Nachteil, als dass es aufgrund der unterschiedlichen Fensterabmessungen, -konstruktionen und Wandstärken unterschiedlicher Gerätekonstruktionen und -abmessungen bedarf. Die Geräteanpassung an bestehende Fensteröffnungen ist deshalb im höchsten Maße aufwendig und nicht zuletzt auch kostenintensiv. Die Ausführungsalternative des rauminnenseitig montierten Raumgerätes macht die Ausbildung von Bohrungen oder Durchbrüchen durch die Außenwand des Gebäudes erforderlich, um so den gewünschten Luftaustausch ermöglichen zu können. Diese Ausgestaltung ist aber auch aus ästhetischen Gründen von Nachteil, da die Lüftungsgitter, die dem außenseitigen Verschluss der Lüftungsrohre oder -kanäle dienen, von außen gut sichtbar sind. Diese Gitter können im Übrigen nur von außen montiert werden, was bei Gebäuden mit mehreren Stockwerken aufwendige Gerüstarbeiten erforderlich macht. Auch insofern ist diese vorbekannte Ausführungsform von Raumgeräten von Nachteil.

Ausgehend vom Vorbeschriebenen ist es die **Aufgabe** der Erfindung, ein System zur Raumbelüftung vorzuschlagen, das die vorgenannten Nachteile zu überwinden hilft und die Verwendung von Standardkomponenten gestattet.

Zur **Lösung** dieser Aufgabe wird mit der Erfindung vorgeschlagen ein System zur Raumbelüftung mit den Merkmalen nach Anspruch 1.

Das erfindungsgemäße System verfügt über ein Lüftungsgerät in der Ausgestaltung eines Raumgerätes. Dieses Gerät verfügt über einen Zuluftkanal, einen Abluftkanal und einen Wärmetauscher. Erfindungsgemäß ist dabei vorgesehen, dass das Lüftungsgerät rauminnenseitig montiert ist, beispielsweise an einer Wand. Eine Decken- oder Fußbodenmontage ist natürlich auch möglich. Der entscheidende Unterschied zum vorbekannten Stand der Technik besteht jedenfalls darin, dass keine Einpassung des Gerätes in eine Fensteröffnung erfolgt, das Gerät also nicht in die Fensteröffnung eingesetzt ist. Aufwendige An- und Einpassungsarbeiten können mit dem System nach der Erfindung deshalb in vorteilhafter Weise vermieden werden. Es ist stattdessen vielmehr möglich, standardisierte Bauformen zu verwenden, da es auf das Größenverhältnis zwischen Gerät einerseits und Fensteröffnung andererseits nicht ankommt.

Der Zuluftkanal sowie der Abluftkanal sind erfindungsgemäß durch eine in einer Raumwand ausgebildete Fensteröffnung geführt. Anders als aus dem Stand der Technik vorbekannt, sind für den Zuluftkanal und den Abluftkanal keine separat auszubildenden Wanddurchbrüche vorgesehen. Es wird vielmehr eine ohnehin schon vorgesehene Fensteröffnung dazu genutzt, die mit dem Wärmetauscher des Lüftungsgerätes verbundene Zuluft- und Abluftkanäle mit der Außenatmosphäre zu verbinden, indem die Kanäle durch die Fensteröffnung hindurch geführt sind. Es lassen sich auch bezüglich dieser Kanäle Standardbauformen verwenden, weshalb die Installation und bestimmungsgemäße Einrichtung eines erfindungsgemäßen Lüftungsgerätes in einfacher Weise vorgenommen werden kann.

Gemäß einer bevorzugten Ausführungsform der erfindungsgemäßen Ausgestaltung ist das Lüftungsgerät fensteröffnungsnah ausgerichtet. "Fensteröffnungsnah" bedeutet dabei, dass das Lüftungsgerät so nah wie möglich, das heißt so nah wie dies durch die baulichen Gegebenheiten gestattet ist, an der Fensteröffnung angeordnet ist, um die Länge des Zuluftkanals und des Abluftkanals so kurz wie möglich auszugestalten. Beispielsweise kann das Lüftungsgerät direkt unterhalb einer Fensteröffnung wandmontiert angeordnet sein. Der Zuluftkanal und der Abluftkanal können in diesem Fall beispielsweise vom Gerät kommend rauminnenseitig entlang der Raumwand geführt sein. Direkt unterhalb der Fensterinnenbank sind die Kanäle in Richtung auf die Fensteröffnung abgewinkelt und unterhalb des Fensterrahmens, das heißt zwischen Fensterrahmen und Fensterleibung durch die Fensteröffnung hindurchgeführt. Eine Ausrichtung des Lüftungsgerätes seitlich einer Fensteröffnung oder oberhalb einer solchen ist selbstredend auch möglich.

Infolge des Hindurchführens der Kanäle durch die Fensteröffnung verringert sich der zur Verfügung stehende Einbauraum für ein in die Fensteröffnung einzusetzendes Fenster. Der von den Kanälen benötigte Einbauraum ist aber sehr viel kleiner als im Falle der vorbekannten Konstruktion, dergemäß Raumgeräte als solche in die Fensteröffnung eingepasst sind. Der benötigte Einbauraum für die Kanäle kann in vorteilhafter Weise zum Großteil durch moderne Fensterrahmenkonstruktionen der neuesten Generation ausgeglichen werden, die im Unterschied zu Altkonstruktionen, wie sie häufig in Sanierungsobjekten anzutreffen sind, sehr viel weniger volumig sind.

Es kann gemäß einem weiteren Merkmal der Erfindung vorgesehen sein, dass der Abluftkanal und der Zuluftkanal in einer Rahmenverbreiterung für das Fenster geführt sind, das heißt in dieser Rahmenverbreiterung integriert sind. Dies ermöglicht eine nahezu unsichtbare Kanalinstallation.

Die außenseitigen Öffnungen von Zuluftkanal und Abluftkanal sind in an sich aus dem Stand der Technik bekannter Weise mittels eines Gitters verschlossen. Dabei ermöglicht die erfindungsgemäße Ausgestaltung eine solche Ausrichtung von Abluftkanal und Zuluftkanal, dass eine Abdeckung der Luftgitter durch das außenliegende Fensterbrett erfolgt. Anders als aus dem Stand der Technik vorbekannte Konstruktionen erweist sich die erfindungsgemäße Ausgestaltung insofern auch unter dem ästhetischen Gesichtspunkt als vorteilhaft.

Der Abluftkanal sowie der Zuluftkanal sind nach der erfindungsgemäßen Ausgestaltung in vorteilhafter Weise von der Raumseite zugänglich, was die Wartung und Pflege gegenüber dem Stand der Technik vereinfacht. Im Übrigen kann eine bestimmungsgemäße Luftgitterinstallation von der Raumseite her durchgeführt werden, was im Falle eines mehrgeschossigen Gebäudes aufwendige Gerüstarbeiten vermeiden lässt.

Das erfindungsgemäße System umfasst des Weiteren einen Ventilator. Dieser Ventilator ist aus Gründen der Geräuschdämmung vorzugsweise raumaußenseitig angeordnet. Er kann beispielsweise in den Zuluftkanal oder den Abluftkanal eingesetzt sein oder sich endseitig desselben befinden. Es können auch zwei Ventilatoren, das heißt je Kanal ein Ventilator vorgesehen sein.

Der Wärmetauscher ist erfindungsgemäß als Enthalpietauscher ausgebildet, der nicht nur einen Wärmeaustausch sondern auch einen Feuchtigkeitsaustausch ermöglicht. Infolge des Wärmeaustausches entsteht bei der Abkühlung der warmen Raumluft an den Tauscherflächen Feuchtigkeit durch Kondensation. Diese wird mittels des Enthalpietauschers an die einströmende Frischluft übertragen. Es findet insofern nicht nur ein Wärmeübergang von der verbrauchten Raumluft auf die einströmende Frischluft sondern auch eine Feuchtigkeitsübermittlung von der Raumluft auf die Frischluft statt. Dieser Feuchtigkeitsaustausch ist insofern von Vorteil, als dass ein Austrocknen der Raumluft verhindert wird, was insbesondere in der kalten Jahreszeit ein Problem darstellt, weil die von außen einströmende kalte Frischluft beim Erwärmen im Tauscher austrocknet.

Das im Enthalpietauscher vorhandene Tauschermaterial ist erfindungsgemäß antibakteriell ausgerüstet, so dass der Durchgang von Bakterien, Mikroben und anderen Erregern verhindert ist. Diese Ausgestaltung ist insofern von Vorteil, als dass die Ausbreitung von Krankheiten über das Lüftungssystem verhindert wird.

Weitere Vorteile und Merkmale der Erfindung ergeben sich aus der nachfolgenden Beschreibung anhand der Fign. Dabei zeigen
Fig. 1 in schematischer Seitenansicht ein erfindungsgemäßes System gemäß einer ersten Ausführungsform;
Fig. 2 das System nach Fig. 1 gemäß Schnittlinie II-II nach Fig. 1;
Fig. 3 in schematischer Seitenansicht ein erfindungsgemäßes System gemäß einer zweiten Ausführungsform;
Fig. 4 das System nach Fig. 1 gemäß Schnittlinie IV-IV nach Fig. 3 und
Fig. 5 in schematischer Seitenansicht ein erfindungsgemäßes System gemäß einer dritten Ausführungsform.

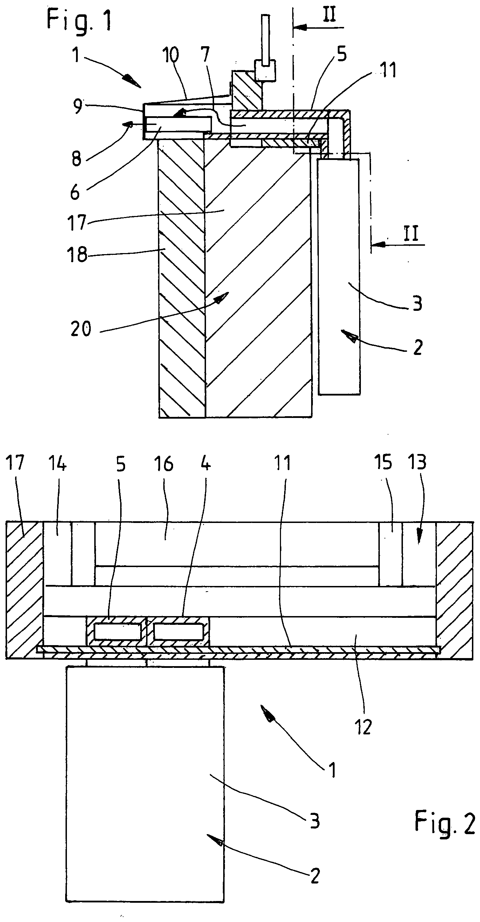

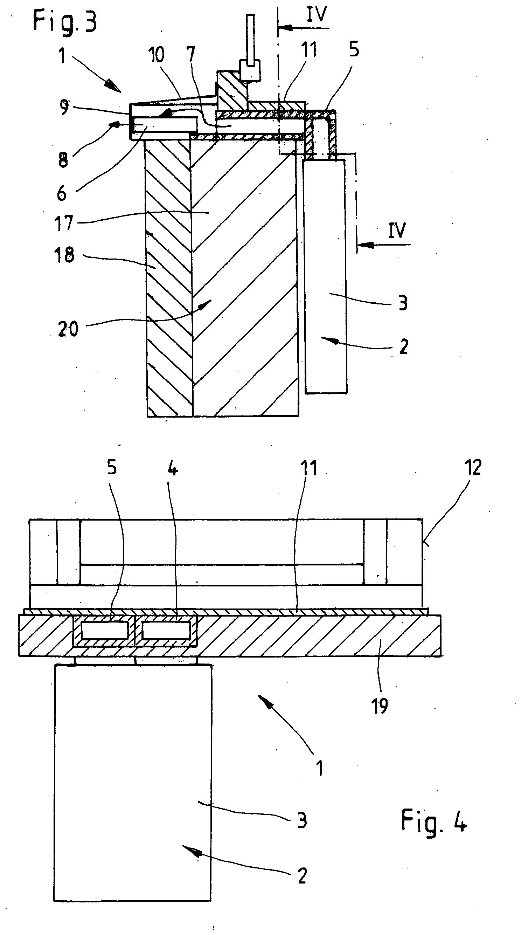

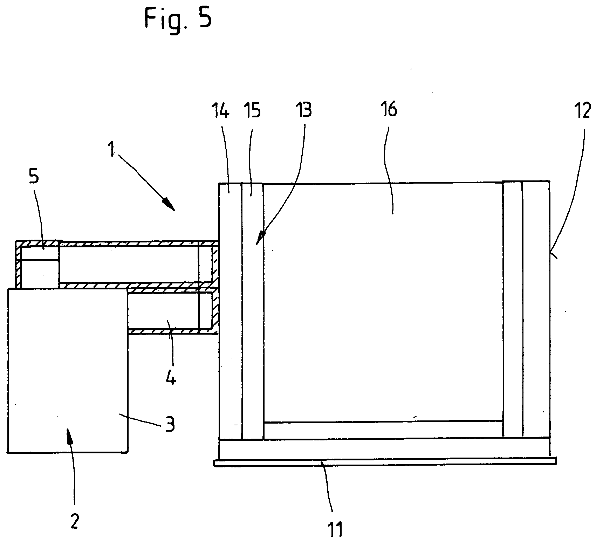

In den Fign. 1 bis 5 ist ein erfindungsgemäßes System 1 zur Raumbelüftung in unterschiedlichen Ausführungsformen gezeigt. Dabei betreffen die Fign. 1 und 2 eine erste Ausführungsform, die Fign. 3 und 4 eine zweite Ausführungsform sowie Fig. 5 eine dritte Ausführungsform.

Das erfindungsgemäße System 1 verfügt über ein Lüftungsgerät 2, das rauminnenseitig an der Raumwand 20 montiert ist. Die Ausführungsform nach den Fign. 1 und 4 zeigt eine Ausgestaltung, dergemäß das Lüftungsgerät 2 unterhalb der Fensteröffnung 12, das heißt zwischen der Fensteröffnung 12 und einem nicht gezeigten Fußboden angeordnet ist. Das Ausführungsbeispiel nach Fig. 5 zeigt eine Ausführungsform, dergemäß das Lüftungsgerät 2 seitlich, und zwar mit Bezug auf die Zeichnungsebene nach Fig. 5 links der Fensteröffnung 12 angeordnet ist.

Die Raumwand 20 ist im gezeigten Ausführungsbeispiel durch ein Mauerwerk 17 gebildet, das raumaußenseitig eine Außenfassade 18, beispielsweise in Form eines Wärmedämmsystems trägt. In die Raumwand 20 ist eine Fensteröffnung 12 eingebracht. In dieser Fensteröffnung 12 befindet sich ein nicht näher bezeichnetes Fenster, das in an sich bekannter Weise einen Fensterrahmen 13 sowie eine Fensterscheibe 16 bereitstellt. Der Fensterrahmen 13 ist im gezeigten Ausführungsbeispiel aus einem feststehenden und mit dem Mauerwerk 17 verbundenen Außenrahmen 14 und einem zum Außenrahmen 14 relativ verschwenkbaren Innenrahmen 15 gebildet. Der Innenrahmen 15 trägt die Fensterscheibe 16, wie sich insbesondere aus der Darstellung nach den Fign. 2, 4 und 5 ergibt. Es sind in an sich aus dem Stand der Technik bekannter Weise des Weiteren eine Innenfensterbank 11 sowie eine Außenfensterbank 10 vorgesehen.

Das als Raumgerät ausgebildete Lüftungsgerät 2 verfügt über einen in den Fign. nur schematisch dargestellten Wärmetauscher 3, der bevorzugterweise in einem entsprechenden und in den Fign. nicht näher dargestellten Gehäuse untergebracht ist. Der Wärmetauscher 3 ist an einen Zuluftkanal 4 und einen Abluftkanal 5 angeschlossen, die im gezeigten Ausführungsbeispiel einen rechteckförmigen Querschnitt aufweisen. Auch andere Querschnittsformen sind denkbar, so zum Beispiel ein ovaler oder kreisförmiger Querschnitt. Der Wärmetauscher 3 ist bevorzugterweise als Enthalpietauscher ausgebildet, der nicht nur einen Wärmeübergang sondern auch einen Feuchtigkeitsübergang von der verbrauchten, warmen Raumluft auf die neu eingeführte Frischluft zulässt. In vorteilhafter Weise kann so die Austrocknung der im Raum befindlichen Luft verhindert werden. Insbesondere an kalten Wintertagen erweist sich diese Ausgestaltung als vorteilhaft. Dabei ist die Tauschereinheit bevorzugterweise mit einem Tauschermaterial bestückt, das antibakteriell ausgerüstet ist. Die Übertragung von Bakterien, Mikroben und/oder anderen Krankheitserregern durch das erfindungsgemäße System kann so verhindert werden. Die antibakterielle Ausrüstung kann beispielsweise dadurch gegeben sein, dass das Tauschermaterial mit einer entsprechenden antibakteriell wirkenden Substanz oberflächenbeschichtet ist. Es können auch antibakteriell wirkende Stoffe in das Tauschermaterial eingebracht sein.

Außenseitig ist an den Abluftkanal 5 ein Ventilator 6 angeschlossen. Im bestimmungsgemäßen Verwendungsfall wird durch diesen in Sogrichtung 8 Abluft 7 angesogen und über den Abluftkanal 5 nach außen abgegeben. Über den Zuluftkanal 4 strömt gleichzeitig Frischluft zu, wobei im Wärmetauscher 3 ein Wärmeaustausch zwischen Zuluft und Abluft erfolgt.

Außenseitig sind der Zuluftkanal 4 und der Abluftkanal 5 durch ein Gitter 9 verschlossen, das im gezeigten Ausführungsbeispiel nach den Fign. 1 bis 4 durch die Außenfensterbank 10 in vorteilhafter Weise abgedeckt ist.

Wie die Darstellung nach den Fign. 1 bis 5 gut erkennen lässt, sind der Zuluftkanal 4 und der Abluftkanal 5 durch die Fensteröffnung 12 hindurchgeführt. Der Wärmetauscher 3 ist in unmittelbarer Nähe zur Fensteröffnung 12 angeordnet, weshalb die Kanäle 4 und 5 verhältnismäßig kurz ausgebildet werden können.

Das Ausführungsbeispiel nach den Fign. 1 und 2 zeigt eine Ausgestaltung, dergemäß die Kanäle 4 und 5 in eine nicht näher bezeichnete Rahmenverbreiterung eingebracht sind. Dabei erstreckt sich die Rahmenverbreiterung im Spaltraum zwischen dem mit Bezug auf die Zeichnungsebene nach Fig. 2 unteren Holm des Außenrahmens 14 und der Innenfensterbank 11.

Die Ausführungsform nach den Fign. 3 und 4 zeigt eine Konstruktion, dergemäß die Kanäle 4 und 5 unterhalb der Innenfensterbank 11 verlegt sind, wobei die Innenfensterbank 11 von einem Träger 19, beispielsweise einem Einsatzstück aus Kunststoff gehalten bzw. getragen ist.

### Bezuqszeichenliste

- 1: System
- 2: Lüftungsgerät
- 3: Wärmetauscher
- 4: Zuluftkanal
- 5: Abluftkanal
- 6: Ventilator
- 7: Abluft
- 8: Sogrichtung
- 9: Gitter
- 10: Außenfensterbank
- 11: Innenfensterbank
- 12: Fensteröffnung
- 13: Fensterrahmen
- 14: Außenrahmen
- 15: Innenrahmen
- 16: Fensterscheibe
- 17: Mauerwerk
- 18: Außenfassade
- 19: Träger
- 20: Raumwand

## Patentansprüche

1. System (1) zur Raumbelüftung, mit einer in einer Raumwand (20) ausgebildeten Fensteröffnung (12) und mit einem Lüftungsgerät (2), das einen Zuluftkanal (4), einen Abluftkanal (5) und einen Wärmetauscher (3) aufweist, wobei der Wärmetauscher (3) rauminnenseitig angeordnet ist und der Zuluftkanal (4) sowie der Abluftkanal (5) durch eine in einer Raumwand (20) ausgebildete Fensteröffnung (12) geführt sind, wobei der Wärmetauscher (3) ein Enthalpietauscher ist, der ein Tauschermaterial enthält, das antibakteriell ausgerüstet ist.

2. System nach Anspruch 1, **dadurch gekennzeichnet, dass** der Wärmetauscher (3) fensteröffnungsnah angeordnet ist.

3. System nach Anspruch 1 oder 2, **dadurch gekennzeichnet, dass** der Zuluftkanal (4) und der Abluftkanal (5) zwischen einem die Fensteröffnung (12) begrenzenden Mauerwerk (17) und einem in die Fensteröffnung (12) eingesetzten Rahmen (13) eines Fensters hindurchgeführt sind.

4. System nach einem der vorhergehenden Ansprüche, **dadurch gekennzeichnet, dass** der Zuluftkanal (4) und der Abluftkanal (5) in eine Verbreiterung eines Fensterrahmens (13) integriert sind.

5. System nach einem der vorhergehenden Ansprüche, **gekennzeichnet durch** einen im Zuluft- oder Abluftkanal (4, 5) angeordneten Ventilator (6).

6. System nach Anspruch 5, **dadurch gekennzeichnet, dass** der Ventilator (6) raumaußenseitig angeordnet ist.

7. System nach einem der vorhergehenden Ansprüche, **dadurch gekennzeichnet, dass** der Zuluftkanal (4) und der Abluftkanal (5) jeweils eine raumaußenseitige Öffnung bereitstellen, die unterhalb einer Außenfensterbank (10) ausgebildet sind.

8. System nach einem der vorhergehenden Ansprüche 1 bis 6, **dadurch gekennzeichnet, dass** die raumaußenseitigen Öffnungen des Zuluftkanals (4) und des Abluftkanals (5) seitlich eines Fensterrahmens (13) oder oberhalb eines oberen Fensterrahmenholms ausgebildet sind.

9. System nach einem der vorhergehenden Ansprüche, **dadurch gekennzeichnet, dass** die raumaußenseitigen Öffnungen des Zuluftkanals (4) des Abluftkanals (5) jeweils mit einem Gitter verschlossen sind.

## Claims

1. System (1) for air conditioning with a window opening (12) formed in a room wall (20) and with a ventilation device (2) which has a supply air duct (4), an exhaust air duct (5) and a heat exchanger (3), the heat exchanger (3) being arranged on the inside of the room and the supply air duct (4) and the exhaust air duct (5) being guided through a window opening (12) formed in a room wall (20), the heat exchanger (3) being an enthalpy exchanger which contains an exchanger material which is equipped antibacterial.

2. System according to claim 1, **characterized in that** the heat exchanger (3) is arranged close to a window opening.

3. System according to claim 1 or 2, **characterized in that** the supply air duct (4) and the exhaust duct (5) are passed through between a masonry (17) delimiting the window opening (12) and a frame (13) of a window inserted into the window opening (12).

4. System according to one of the preceding claims, **characterized in that** the supply air duct (4) and the exhaust air duct (5) are integrated in an expansion of a window frame (13).

5. System according to one of the preceding claims, **characterized by** a fan (6) arranged in the supply air or exhaust air ducts (4, 5).

6. System according to claim 5, **characterized in that** the fan (6) is arranged outside the room.

7. System according to any of the preceding claims, **characterized in that** the supply air duct (4) and the exhaust air duct (5) each provide an opening on the room outside which are formed below an outside window sill (10).

8. System according to any of the preceding claims 1 to 6, **characterized in that** the openings of the supply air duct (4) and the exhaust air duct (5) on the room outside are formed laterally of a window frame (13) or above an upper window frame member.

9. System according to any of the preceding claims, **characterized in that** the openings of the supply air duct (4) of the exhaust air duct (5) on the outside of the room are each closed by a grille.

## Revendications

1. Système d'aération d'espace avec une ouverture de fenêtre (12) formée dans un mur (20) de l'espace et avec dispositif d'aération (2) qui comporte un conduit d'air d'alimentation (4), un conduit d'air d'évacuation (5) et un échangeur de chaleur (3), l'échangeur de chaleur (3) étant disposé à l'intérieur de l'espace et le conduit d'air d'alimentation (4) et le conduit d'air d'évacuation (5) étant guidés à travers une ouverture de fenêtre (12) formée dans un mur (20) de l'espace, l'échangeur de chaleur (3) étant un échangeur enthalpique qui contient un matériau d'échangeur qui est équipé de manière antibactérienne.

2. Système selon la revendication 1, **caractérisé en ce que** l'échangeur de chaleur (3) est disposé à proximité de l'ouverture de la fenêtre.

3. Système selon la revendication 1 ou 2, **caractérisé en ce que** le conduit d'air d'alimentation (4), et le conduit d'air d'évacuation (5) passent entre une maçonnerie (17) délimitant l'ouverture de la fenêtre (12) et un cadre (13) d'une fenêtre inséré dans l'ouverture de la fenêtre (12).

4. Système selon l'une des revendications précédentes, **caractérisé en ce que** le conduit d'air d'alimentation (4) et le conduit d'air d'évacuation (5) sont intégrés dans un élargissement d'un cadre de fenêtre (13).

5. Système selon l'une des revendications précédentes, **caractérisé par** un ventilateur (6) disposé dans le conduit d'air d'alimentation ou d'air d'évacuation (4, 5).

6. Système selon la revendication 5, **caractérisé en ce que** le ventilateur (6) est disposé à l'extérieur de l'espace.

7. Système selon l'une des revendications précédentes, **caractérisé en ce que** le conduit d'air d'alimentation (4) et le conduit d'air d'évacuation (5) fournissent chacun une ouverture sur l'extérieur de l'espace qui sont formées sous un rebord de fenêtre extérieur (10).

8. Système selon l'une des revendications précédentes 1 à 6, **caractérisé en ce que** les ouvertures du conduit d'air d'alimentation (4) et du conduit d'air d'évacuation (5) à l'extérieur de l'espace sont formées latéralement d'un cadre de fenêtre (13) ou au-dessus d'un longeron supérieur de cadre de fenêtre.

9. Système selon l'une des revendications précédentes, **caractérisé en ce que** les ouvertures extérieures du conduit d'air d'alimentation (4) du conduit d'air d'évacuation (5) à l'extérieur de l'espace sont chacune fermées par une grille.
